# FASCICULE DE BREVET EUROPEEN

(11) **EP 2 550 102 B1**
(45) Date de publication et mention de la délivrance du brevet: **04.05.2016**
(21) Numéro de dépôt: 11709998.6
(22) Date de dépôt: 18.02.2011
(51) Int. Cl.: B01J 38/24, B01J 23/90, B01J 8/12, C10G 59/00, C07C 5/27, C07C 6/02, C07C 5/32, C10G 11/16, C10G 50/00, C10G 35/12

(54) **ZONE DE REGENERATION DU CATALYSEUR DIVISEE EN SECTEURS POUR UNITES CATALYTIQUES REGENERATIVES**
IN SEKTOREN UNTERTEILTE REGENERIERUNGSZONE IN EINER VORRICHTUNG ZUR REGENIERUNG VON KATALYSATOREN
CATALYST REGENERATION ZONE DIVIDED INTO SECTORS IN A CATALYST REGENERATION UNIT

(30) Priorité: 24.03.2010 FR 1001161
(43) Date de publication de la demande: 30.01.2013
(73) Titulaire: IFP Énergies nouvelles, 92852 Rueil-Malmaison Cedex (FR)
(72) Inventeur: SANCHEZ, Eric, F-69230 Saint Genis Laval (FR); BAZER-BACHI, Frédéric, F-69230 Saint Genis-Laval (FR); FISCHER, Béatrice, F-69005 Lyon (FR)
(86) Numéro de dépôt international: PCT/FR2011/000103
(87) Numéro de publication internationale: WO 2011/117478

(56) Documents cités:
- EP-A1- 0 378 482
- EP-A1- 0 872 277
- EP-A1- 0 873 784
- FR-A1- 2 934 963

## Description

### DOMAINE DE L'INVENTION

La présente invention se situe dans le domaine des unités faisant appel à la technologie du lit mobile, technologie que l'on rencontre par exemple dans les unités de reformage catalytique des essences, dans les unités d'isomérisation squelettale, dans les unités de métathèse ou dans certaines unités d'oligocraquage ou de déshydrogénation.. Cette technologie se caractérise par le fait que le lit catalytique suit un mouvement gravitaire lent tandis que la charge à traiter traverse le lit de façon transversale ou radiale. Pour ce faire la charge est généralement introduite à la périphérie du lit catalytique en écoulement gravitaire, et les effluents de la réaction sont collectés dans un collecteur central. Une circulation depuis le centre vers la périphérie du lit catalytique est également envisageable.

Dans les unités de reformage catalytique la zone de régénération du catalyseur coké est également mis en oeuvre selon la technologie du lit mobile. Cette zone de régénération comprend plusieurs étapes, de combustion, d'oxychloration, de calcination et de réduction du catalyseur qui sont décrites dans les brevets FR2641712 , FR2761910 et FR2922786 par exemple.

La présente invention concerne plus particulièrement une disposition de la zone de combustion faisant partie de la zone de régénération, cette zone de combustion étant divisée en secteurs radiaux, chaque secteur étant traversé par le gaz comburant selon un trajet spécifique.

Les avantages de cette nouvelle configuration par rapport à l'art antérieur sont un meilleur contrôle en température de ladite zone de combustion et une consommation optimisée de gaz comburant. La présente invention entraine également une simplification des internes de la zone de combustion par rapport à l'art antérieur.

### EXAMEN DE L'ART ANTERIEUR

Dans les unités dite régénératives, telle que par exemple le reformage catalytique des essences, la régénération du catalyseur coké après son passage en zone réactionnelle est effectuée en continu.

C'est le cas par exemple du reformage catalytique à forte sévérité. Dans ce type d'unité, le catalyseur est extrait en continu du ou des réacteurs, purgé de l'hydrogène qu'il contient et envoyé vers une zone de régénération dans laquelle le coke est brûlé de manière contrôlée pour rétablir l'activité du catalyseur. D'autres opérations sont effectuées dans la zone de régénération telles que l'oxychloration, la calcination et la réduction du catalyseur, mais la présente invention concerne particulièrement la zone de combustion.

Dans cette zone de combustion, il convient d'éviter de trop chauffer le catalyseur pour ne pas détériorer ses performances catalytiques et d'éviter la formation de point chaud, ce qui oblige à travailler avec de l'oxygène fortement dilué par des gaz inertes (azote et gaz carbonique par exemple).

Dans ce but, il est habituel de recycler les gaz de combustion appauvris en oxygène pour servir de diluant, en injectant une petite quantité d'air de manière à ce que la teneur en oxygène soit suffisamment faible pour limiter l'exothermicité de la réaction de combustion.

Il est connu de l'homme du métier de réaliser la combustion en deux étapes, une première étape à température faible et en défaut de comburant pour brûler de manière contrôlée la plus grande partie du coke avec une augmentation de température importante mais néanmoins limitée, suivie d'une seconde étape à température plus élevée et en excès de comburant pour terminer la combustion, mais s'accompagnant d'une augmentation de température relativement faible du fait de la faible quantité de coke restant à brûler.

Dans l'art antérieur la combustion du coke est généralement effectuée dans deux lits radiaux de faible épaisseur disposés en couronne dans lequel le catalyseur circule de haut en bas à vitesse faible par écoulement gravitaire, le gaz de combustion circulant horizontalement à travers le lit radial, le plus souvent de l'extérieur du lit vers l'intérieur.

Les gaz soutirés des différentes zones de régénération sont récupérés et traités de manière à pouvoir être recyclés de nouveau dans la zone de régénération. En effet, selon l'art antérieur il est connu de diluer l'oxygène par de l'azote. Or l'azote est un gaz très onéreux. Par exemple, pour une unité de reformage de 40 tonnes de catalyseur, si l'on ne réutilisait pas les gaz de régénération , on serait conduit à utiliser environ 6000 à 10000 Nm3/h d'azote.

En recyclant les gaz de régénération, la consommation d'azote frais tombe à environ 80 Nm3/h. De plus, le circuit gaz de régénération comprend divers équipements onéreux comme le compresseur de recyclage, le sécheur, four électrique et échangeur. Toute réduction du débit d'azote a donc un impact très important sur les coûts d'investissement et les coûts opératoires de la boucle de régénération du catalyseur.

Un des objets de la présente invention est d'optimiser l'utilisation du débit de gaz inertes et ainsi de réduire la taille des équipements pour une même quantité de catalyseur régénéré, en utilisant une zone de régénération d'un type nouveau.

L'art antérieur est constitué en particulier de la demande de brevet publiée sous le numéro FR 2 934 963 A1, qui décrit une zone de combustion comportant au moins une zone annulaire de combustion du coke, ladite zone étant divisée en secteurs radiaux, chaque étage comprenant N secteurs radiaux.

Dans la demande citée, la combustion est gérée par la notion de composition molaire avec une teneur en oxygène constante à l'entrée de chaque secteur. Il en résulte une variation de la quantité de coke brûlé d'un secteur à un autre d'un même étage, et donc une possible inhomogénéité de la qualité de combustion dans les différents secteurs.

Selon la présente invention, c'est le débit molaire d'oxygène qui est maintenu constant sur tous les secteurs d'un étage de sorte que la quantité de coke brûlé est la même sur tous les secteurs d'un étage. L'amélioration de l'homogénéité de la combustion sur tous les secteurs constituant un étage, garantit alors des performances catalytiques optimisées, nécessaires à l'obtention des indices d'octane élevés recherchés par exemple dans les unités de reformage régénératif.

Le document EP 0 872 277 décrit un procédé de régénération de catalyseur en lit mobile dans lequel chaque zone de combustion est séparée des zones de combustion adjacentes, et la sévérité des conditions opératoires dans chaque zone s'accroit avec le sens d'écoulement du catalyseur. Ce document ne décrit aucune division d'une zone de combustion en différents secteurs. Il est simplement indiqué que dans chaque zone est introduit au moins un gaz contenant de l'oxygène.

### DESCRIPTION SOMMAIRE DES FIGURES

La figure 1 est une vue schématique en coupe d'une zone de combustion selon l'invention avec plus de 2 secteurs par étage et qui montre le circuit du gaz comburant.
La figure 2 est une vue schématique en vue de dessus de la zone de combustion selon l'invention qui permet de distinguer 4 secteurs par étage.

### DESCRIPTION SOMMAIRE DE L'INVENTION

La présente invention décrit un procédé de régénération d'un catalyseur coké à l'issue d'une zone réactionnelle, le catalyseur circulant dans la zone de régénération à l'état de lit mobile. On entend par lit mobile un mode de circulation gravitaire du catalyseur, le gaz permettant la régénération dudit catalyseur dans la zone de régénération circulant selon une direction sensiblement perpendiculaire à celle de l'écoulement du catalyseur.

La présente invention consiste plus précisément en un procédé de régénération du catalyseur coké à l'issue de la zone réactionnelle qui comprend au moins une zone de combustion du coke déposé sur le catalyseur. Ce procédé est défini dans les revendications 1 à 5.

Le procédé de régénération selon la présente invention peut être appliqué à des unités dites régénératives dans lesquelles le catalyseur coké au cours de la réaction doit être régénéré en continu. Le procédé de régénération du catalyseur consiste généralement en une étape de d'oxychloration, de calcination suivie d'une étape de réduction du catalyseur. Le catalyseur régénéré est réintroduit dans la zone de réaction. Les étapes situées en aval de l'étape de combustion ne font pas partie de la présente invention qui est parfaitement compatible avec tout mode de réalisation desdites étapes aval.

La présente invention concerne donc l'étape de combustion de la zone de régénération, appelée par la suite zone de combustion.

La zone de combustion selon la présente invention est une zone à deux étages dans laquelle le catalyseur circule en lit mobile c'est à dire en écoulement gravitaire, et dans laquelle le gaz comburant traverse le lit de catalyseur de manière radiale, préférentiellement depuis la périphérie externe du lit jusqu'à sa périphérie interne. Le lit de catalyseur a une forme annulaire et est divisé en un certain nombre de secteurs radiaux.

Pour la compréhension du circuit de circulation des gaz, les secteurs du premier étage de combustion sont numérotés de 1 à N, et les secteurs du second étage sont numérotés de 1' à N'.

Un secteur i du premier étage et le secteur i' du second étage se trouvent approximativement à l'aplomb l'une de l'autre, et le nombre de secteurs du premier étage et égal au nombre de secteurs du second étage. Les secteurs i et i', à l'aplomb l'un de l'autre, sont dits secteurs correspondants.

La circulation du gaz de combustion consiste à parcourir tous les secteurs du premier étage dans un ordre quelconque, puis tous les secteurs du second étage dans un ordre quelconque. Par exemple, dans une configuration où chaque étage est divisé en 4 secteurs un circuit de circulation possible selon la présente invention est le circuit 1, 2, 3, 4, 1', 2', 3', 4'.

Un autre circuit possible est le circuit 1, 2, 3, 4, 4', 3', 2', 1', selon la façon dont est assurée la transition du gaz comburant entre les deux étages de combustion.

On peut aussi envisager un circuit du type 1, 3, 4, 2, 2', 4', 3',1'. En fait, tout circuit parcourant les secteurs du premier étage dans un ordre quelconque, puis les secteurs du second étage dans un ordre également quelconque, reste dans le cadre de la présente invention.

Une autre caractéristique importante de la présente invention qui la distingue de l'art antérieur est le fait que chaque étage de combustion travaille avec un débit molaire d'oxygène constant. Plus précisément, chaque secteur d'un étage de combustion donné reçoit en entrée un gaz comburant tel que le débit molaire d'oxygène est toujours le même.

Ainsi le débit de coke brûlé dans chaque secteur d'un même étage est le même. L'homogénéité du gradient thermique dans les différents secteurs d'un même étage de combustion garantit alors la qualité de la régénération du catalyseur.

Comme le débit du gaz comburant évolue d'un secteur au suivant, cela signifie que la teneur en oxygène n'est pas constante d'un secteur au suivant d'un même étage. Cela reste vrai pour les secteurs du second étage de combustion.

Au niveau du premier étage de combustion, la quantité d'oxygène introduite sur chaque secteur correspond à la combustion d'une quantité de coke comprise entre 50% et 90% du coke total déposé sur le catalyseur, et préférentiellement comprise entre 60% et 80%, et au niveau du second étage, la quantité d'oxygène introduite correspond à la combustion totale du coke résiduel.

En pratique le gaz comburant est introduit sur tous les secteurs du second étage en excès, cet excès pouvant se quantifier par un excès d'oxygène en sortie de secteur compris entre 0,1% et 0,5 % et préférentiellement compris entre 0,2 % et 0,4 % d'oxygène.

De manière préférée, le nombre d'étage de combustion est de deux, et le nombre de secteurs par étage est compris entre 2 et 8, et préférentiellement compris entre 2 et 4.

Des appoints d'un gaz de refroidissement sont faits à l'entrée de chaque secteur de manière à maintenir la température d'entrée entre 460°C à 480°C pour les secteurs du premier étage, et 470°C à 490°C pour les secteurs du second étage.

Ce gaz de refroidissement est généralement le gaz comburant pris en sortie du compresseur de la boucle de recycle, donc avant son passage à travers la série d'échangeurs et/ou fours de réchauffage faisant partie du circuit traditionnel pour les unités de type reformage régénératif. Les appoints de gaz de refroidissement sont généralement effectués par le moyen de lignes spécifiques qui débouchent dans les lignes permettant de relier la sortie d'un secteur à l'entrée du secteur voisin. Dans cette même ligne, le gaz de refroidissement est mélangé à un débit de gaz comburant afin de permettre l'appoint en comburant entre les différents secteurs du même étage. Le gaz comburant peut de manière générale contenir entre 4% et 21 % d'oxygène.

Une variante de la zone de combustion selon la présente invention consiste à ne plus refroidir le gaz comburant par des appoints de gaz de refroidissement, mais en utilisant des échangeurs de chaleur permettant ainsi de diminuer encore sensiblement le débit de gaz comburant total nécessaire à la régénération du catalyseur.

Une autre variante du procédé consiste à simplifier le circuit de distribution du gaz comburant en adoptant une configuration alternée entre les différents secteurs.

On entend par configuration alternée une configuration dans laquelle le gaz comburant circule de l'extérieur vers l'intérieur sur un secteur donné, et circule alors de l'intérieur vers l'extérieur sur le secteur suivant, et ainsi de suite. On appelle secteur suivant d'un secteur donné, le secteur géométriquement voisin qui est parcouru par le gaz comburant.

### DESCRIPTION DETAILLEE DE L'INVENTION

La présente invention peut se décrire comme une zone de combustion pour unités régénératives, par exemple pour le reformage régénératif ou l'isomérisation squelettale dans laquelle l'écoulement du catalyseur a lieu en lit mobile (c'est à dire en écoulement gravitaire) depuis un premier étage jusqu'à un second étage, chaque étage étant divisé en un certain nombre de secteurs radiaux, et la circulation du gaz comburant suivant un circuit caractérisé en ce que le gaz comburant traverse successivement tous les secteurs du premier étage, puis successivement tous les secteurs du deuxième étage.

Dans le cas d'une unité de reformage régénératif ou tous autres procédés nécessitant une régénération continue de catalyseur, la zone de régénération du catalyseur comprend outre la zone de combustion qui permet la combustion du coke déposé sur le catalyseur, d'autres zones dans lesquelles s'effectuent l'oxychloration, la calcination et la réduction du catalyseur. Ces autres zones ne seront pas décrites dans le présent texte car elles restent selon leur configuration de l'art antérieur.

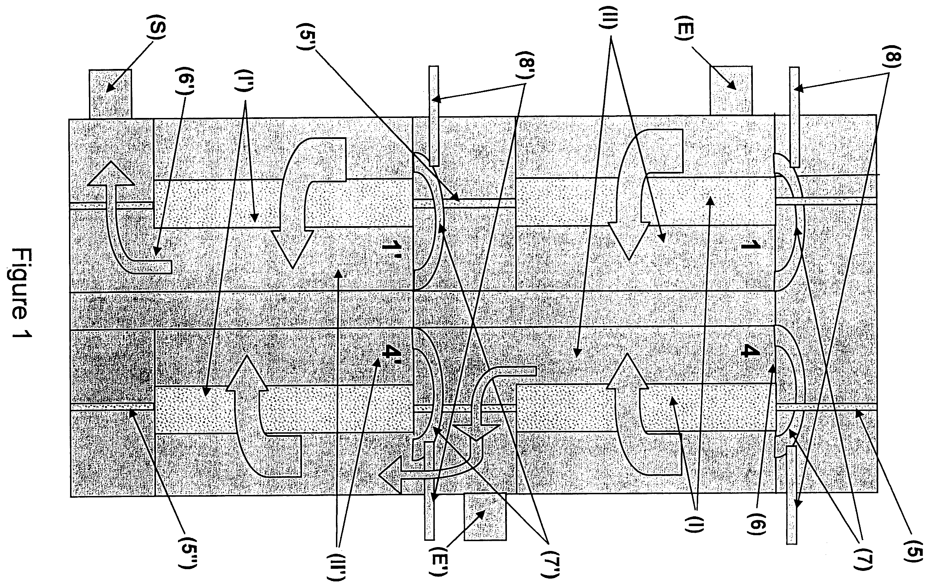

La figure 1 permet de visualiser la structure de la zone de régénération selon l'invention. Nous décrivons ci-dessous le circuit du catalyseur dans le secteur 4, et celui du gaz comburant dans le secteur 1.

La numérotation des secteurs du premier étage de combustion est: 1, 2, 3, 4.

La numérotation des secteurs du second étage, en vis à vis de ceux du premier étage de combustion est: 1', 2', 3' et 4'. Ces secteurs sont séparés par des parois (9). Les secteurs qui se trouvent à l'aplomb l'un de l'autre tels que 1 et 1', 2 et 2', 3 et 3', 4 et 4' sont dits secteurs correspondants.

Le catalyseur est introduit dans l'enceinte supérieure (I) par la jambe (5) et circule dans l'enceinte (I) du secteur 4 en écoulement gravitaire, puis il passe à travers la jambe (5') pour être introduit dans l'enceinte inférieure (I') du secteur 4'. Il quitte le secteur 4' par la ligne de descente (5").

Le gaz comburant est introduit dans l'enceinte (I) par la conduite périphérique (E) communiquant avec le secteur 1, un baffle (6) obligeant le gaz à circuler vers la couronne extérieure de cette zone. Le gaz traverse radialement le lit catalytique (I) depuis la périphérie extérieure vers la périphérie intérieure du lit catalytique, et se retrouve dans l'espace annulaire (II).

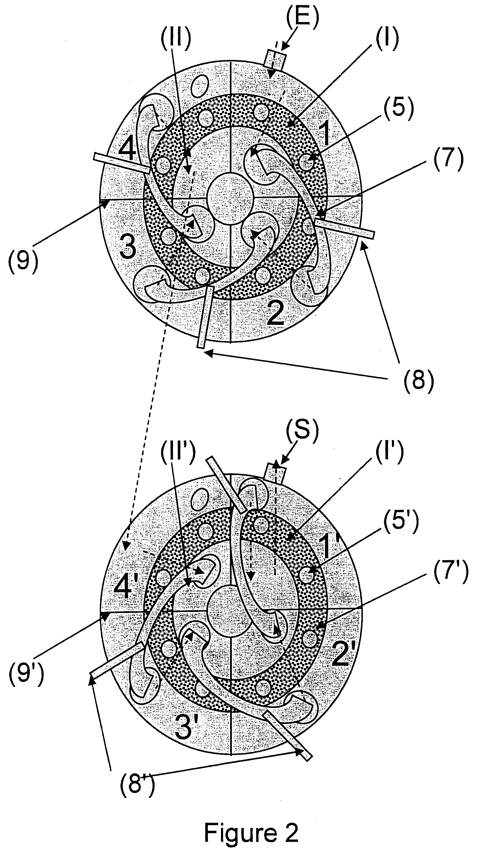

Cet espace annulaire (II) permet de renvoyer le gaz comburant par l'intermédiaire de la ligne (7) à l'entrée du secteur suivant du même espace annulaire, soit le secteur 2 qui apparait sur la figure 2. On appelle secteur suivant un secteur donné le secteur géométriquement voisin qui est parcouru par le gaz comburant selon le sens de parcours dudit gaz comburant.

Le circuit du gaz dans le secteur 2 est le même que celui décrit pour le secteur 1.

De la sortie du secteur 2 le gaz comburant passe à l'entrée du secteur 3, puis de la sortie du secteur 3 le gaz comburant passe à l'entrée du secteur 4

De la sortie du secteur 4 le gaz comburant est introduit à l'entrée du secteur 4' appartenant au second étage de combustion disposé au dessous dudit secteur 4.

Le gaz comburant poursuit son circuit dans le deuxième étage de combustion : sortie secteur 4' vers entrée secteur 3'; sortie secteur 3' vers entrée secteur 2'; sortie secteur 2' vers entrée secteur 1', et sortie secteur 1' vers l'extérieur par la conduite (S).

Les introductions du mélange gaz de refroidissement / appoint de gaz comburant sont effectuées par les lignes (8) qui sont connectées aux lignes (7).

Le gaz comburant quitte le dernier secteur du deuxième étage de combustion par la conduite d'évacuation (S).

La présente invention peut donc se définir comme un procédé de régénération d'un catalyseur coké circulant en lit mobile, ledit catalyseur étant coké à l'issue de la zone réactionnelle.

Le procédé de régénération selon l'invention comporte au moins une zone de combustion du coke déposé sur le catalyseur, la dite zone de combustion ayant une forme annulaire et étant divisée en au moins deux étages de combustion, chaque étage de combustion étant divisé en un nombre N de secteurs radiaux, sensiblement égaux.

Le catalyseur s'écoule de manière gravitaire d'un secteur du premier étage de combustion au secteur situé à l'aplomb du second étage de combustion au moyen de jambes de descente, et la circulation du gaz de combustion est telle que le gaz de combustion parcourt successivement tous les secteurs du premier étage de combustion dans un ordre quelconque, puis tous les secteurs du second étage de combustion dans un ordre quelconque.

Le débit molaire de gaz comburant a une même première valeur pour tous les secteurs du premier étage, ladite première valeur permettant la combustion d'une quantité de coke comprise entre 50% et 90% du coke total déposé sur le catalyseur, préférentiellement comprise entre 60% et 80%.

Le débit molaire de comburant a une même seconde valeur, distincte de la précédente, pour tous les secteurs du second étage de combustion, ladite seconde valeur permettant la combustion totale du coke résiduel avec un excès d'oxygène dans le gaz comburant compris entre 0,1 et 0,5 % d'oxygène, et préférentiellement compris entre 0,2 et 0,4 % d'oxygène.

La température d'entrée de tous les secteurs du premier étage de combustion est généralement comprise entre 460°C et 490°C, et la température d'entrée de tous les secteurs du second étage de combustion est généralement comprise entre 470°C et 510°C.

Le nombre de secteurs dans chaque étage de combustion est généralement compris entre 2 et 8, et préférentiellement compris entre 2 et 4.

Selon une première variante de la présente invention, le nombre de secteurs étant de 4 à chaque étage de combustion, et en numérotant 1, 2, 3, 4 les secteurs du premier étage et 1', 2', 3', 4' les secteurs correspondant du second étage, le gaz comburant suit le circuit 1, 2, 3, 4, 4', 3', 2', 1'.

Selon une seconde variante de la présente invention, le nombre de secteurs étant de 2 à chaque étage de combustion, et en numérotant 1,2 les secteurs du premier étage et 1' ,2' les secteurs correspondant du second étage, le gaz comburant suit le circuit 1, 2, 2', 1'.

Selon une troisième variante de la présente invention le gaz comburant parcourt chaque secteur en allant de la périphérie externe vers la périphérie interne de chacun des secteurs. Selon une autre variante, le gaz comburant parcourt chaque secteur en allant de la périphérie interne vers la périphérie externe de chacun des secteurs.

Enfin selon une autre variante, le gaz comburant circule de la périphérie externe vers la périphérie interne sur un secteur donné, et de la périphérie interne vers la périphérie externe sur le secteur voisin du secteur considéré.

De manière générale, le gaz comburant est de l'air ayant une teneur en oxygène comprise entre 4% et 21%.

Le refroidissement du gaz comburant à l'entrée de chaque secteur peut dans une variante de la présente invention être réalisé au moyen d'un ensemble d'échangeurs.

Le procédé de régénération du catalyseur selon la présente invention peut s'appliquer à toutes les unités faisant appel à un catalyseur nécessitant une régénération en continue et dans lesquelles le catalyseur s'écoule en lit mobile. On peut citer à titre d'exemples les unités suivantes:
reformage régénératif des essences, isomérisation squelettale, métathèse, oligocraquage, déshydrogénation.

### EXEMPLE COMPARATIF

L'exemple qui suit compare la configuration selon l'art antérieur représenté par la demande publiée sous le numéro FR 2 934 963 A1, avec la configuration selon la présente invention. La zone de régénération est divisée en 2 étages, chaque étage comprenant 4 secteurs notés 1, 2, 3, 4 pour le premier étage et 1', 2', 3', 4' pour le second étage.

On compare deux types de circulation du gaz comburant :
1, 1', 2, 2', 3, 3', 4, 4' selon la configuration géométrique de l'art antérieur
1, 2, 3, 4, 4', 3', 2', 1' selon l'invention.

Les conditions communes aux deux configurations sont les suivantes:
- 120 kg.h⁻¹ de coke à brûler (soit 1800 kg.h⁻¹ de catalyseur coké)
- 2 étages de combustion,
- 4 secteurs par étage,
- température moyenne d'entrée pour les secteurs 1 à 4 du premier étage de combustion (475°C) :
- température moyenne d'entrée pour les secteurs 1 à 4 du second étage de combustion (480°C).

Selon l'art antérieur la gestion des débits de gaz comburant est faite en maintenant une teneur constante d'oxygène en entrée de chaque section, ce qui entraine des disparités relativement importantes dans la quantité de coke brûlé et donc dans les températures de sortie des secteurs d'un même étage.

Selon la présente invention la gestion des débits de gaz comburant est faite en maintenant le débit d'oxygène constant à une certaine valeur sur tous les secteurs du premier étage, puis à une autre valeur sur tous les étages du second étage, soit :
- flux molaire d'oxygène arrivant sur les secteurs 1 à 4 du premier étage de combustion ajusté pour brûler 2/3 du coke,
- flux molaire d'oxygène arrivant sur les secteurs 1' à 4' du second étage de combustion ajusté pour brûler le coke restant, avec un excès de 30% par rapport à la quantité d'oxygène stoechiométrique,

On constate sur le tableau 1 ci dessous, selon l'invention, que les températures de sortie des secteurs du premier étage sont situées dans la plage de 530 à 521°C et dans la plage de 506 à 501°C pour les secteurs du second étage. Alors que selon l'art antérieur (Cf tableau 2), la dispersion des températures de sortie de chaque secteur est beaucoup plus prononcée.

On constate également que, selon l'invention, le pourcentage de coke brûlé est bien constant sur tous les secteurs d'un même étage (66,6 % au premier étage et 100 % au second étage), alors qu'il est très différent d'un secteur à l'autre selon l'art antérieur.

**Tableau1 (selon l'invention)**

| Étage 1 / Secteurs | 1 | 2 | 3 | 4 |
|---|---|---|---|---|
| Conversion Coke (%) | 66,6 | 66,6 | 66,6 | 66,6 |
| Débit (t.h⁻¹) | 7,4 | 8,7 | 10,0 | 11,3 |
| %ₘₒₗ O₂ | 0,80 | 0,68 | 0,59 | 0,52 |
| T_{entrée} (°C) | 470 | 473 | 475 | 477 |
| Tₛₒᵣₜᵢₑ (°C) | 530 | 529 | 525 | 521 |
| Etage 2 / Secteurs | 1' | 2' | 3' | 4' |
| Conversion Coke (%) | 100 | 100 | 100 | 100 |
| Débit (t.h⁻¹) | 12,6 | 13,6 | 14,6 | 15,6 |
| %ₘₒₗ O₂ | 0,55 | 0,51 | 0,47 | 0,44 |
| T_{entrée} (°C) | 480 | 480 | 480 | 480 |
| Tₛₒᵣₜᵢₑ (°C) | 506 | 504 | 502 | 501 |

**Tableau 2 (selon l'art antérieur)**

| Etage1/ Secteurs | 1 | 2 | 3 | 4 |
|---|---|---|---|---|
| Conversion Coke (%) | 66,6 | 87,6 | 100 | 100 |
| Débit (t.h⁻¹) | 7,4 | 9,7 | 11,4 | 12,7 |
| %ₘₒₗ O₂ | 0,8 | 0,8 | 0,8 | 0,8 |
| T_{entrée} (°C) | 475 | 475 | 475 | 475 |
| Tₛₒᵣₜᵢₑ (°C) | 536 | 522 | 516 | 511 |
| Etage 2 / secteurs | 1' | 2' | 3' | 4' |
| Conversion Coke (%) | 100 | 100 | 100 | 100 |
| Débit (t.h⁻¹) | 8,6 | 10,9 | 12,6 | 13,9 |
| %ₘₒₗ O₂ | 0,55 | 0,55 | 0,55 | 0,55 |
| T_{entrée} (°C) | 480 | 480 | 480 | 480 |
| Tₛₒᵣₜᵢₑ (°C) | 518 | 491 | 480 | 480 |

## Revendications

1. Procédé de régénération d'un catalyseur coké circulant en lit mobile, comportant au moins une zone de combustion du coke déposé sur le catalyseur, la dite zone de combustion ayant une forme annulaire et étant divisée en au moins deux étages de combustion, chaque étage étant divisé en un nombre N de secteurs radiaux, sensiblement égaux, N étant compris entre 2 et 4, le procédé étant **caractérisé en ce que** le catalyseur s'écoule de manière gravitaire d'un secteur du premier étage de combustion au secteur situé à l'aplomb du second étage de combustion au moyen de jambes de descente, et la circulation du gaz de combustion étant sensiblement perpendiculaire à celle du catalyseur, et telle que le gaz de combustion parcourt successivement tous les secteurs du premier étage de combustion dans l'ordre suivant 1, 2, 3, 4, puis tous les secteurs du second étage de combustion dans l'ordre suivant 4',3', 2',1', lorsque le nombre de secteurs radiaux est de 4, et dans l'ordre suivant 1,2 puis 2',1' lorsque le nombre de secteurs est de 2, ledit procédé étant tel que le débit molaire de comburant a une même première valeur pour tous les secteurs du premier étage, ladite première valeur permettant la combustion d'une quantité de coke comprise entre 60% et 80% du coke total déposé sur le catalyseur, et une seconde valeur, distincte de la précédente, pour tous les secteurs du second étage de combustion, ladite seconde valeur permettant la combustion totale du coke résiduel avec un excès d'oxygène dans le gaz comburant compris entre 0,2% et 0,4 %, et la température d'entrée de tous les secteurs du premier étage de la zone de combustion étant comprise entre 460°C et 480°C, et la température d'entrée de tous les secteurs du second étage de la zone de combustion étant comprise entre 470°C et 490°C, procédé de régénération dans lequel des appoints de gaz de refroidissement sont faits à l'entrée de chaque secteur d'un étage de manière à maintenir la température d'entrée dans les limites précitées, ce gaz de refroidissement étant le gaz comburant pris en sortie du compresseur de la boucle de recycle, et ces appoints étant réalisés au moyen de lignes spécifiques qui débouchent dans les lignes permettant de relier la sortie d'un secteur à l'entrée du secteur voisin.

2. Procédé de régénération d'un catalyseur coké selon la revendications 1, dans lequel le gaz comburant circule de l'extérieur vers l'intérieur sur un secteur donné de la zone de combustion et de l'intérieur vers l'extérieur sur le secteur voisin du secteur considéré.

3. Procédé de régénération d'un catalyseur coké selon l'une quelconque des revendications 1 à 2, dans lequel le gaz comburant est de l'air ayant une teneur en oxygène comprise entre 4% et 21 %.

4. Procédé de régénération d'un catalyseur coké selon l'une quelconque des revendications 1 à 3, dans lequel le gaz comburant est refroidi à l'entrée de chaque secteur de la zone de combustion par un dispositif d'échangeurs.

5. Application du procédé de régénération d'un catalyseur coké selon la revendication 1 aux procédés suivants: reformage régénératif, isomérisation squelettale, métathèse, oligocraquage, déshydrogénation.

## Patentansprüche

1. Verfahren zur Regeneration eines verkokten Katalysators, der in einer Wirbelschicht zirkuliert, umfassend mindestens einen Bereich zur Verbrennung des auf dem Katalysator abgelagerten Koks, wobei der Bereich zur Verbrennung eine ringförmige Form aufweist und in mindestens zwei Verbrennungsstufen geteilt ist, wobei jede Stufe in eine Anzahl N von radialen Sektoren geteilt ist, die im Wesentlichen gleich sind, wobei N im Bereich zwischen 2 und 4 liegt, wobei das Verfahren **dadurch gekennzeichnet ist, dass** der Katalysator durch die Schwerkraft von einem Sektor der ersten Verbrennungsstufe mithilfe von Abstiegsschenkeln zu dem Sektor abfließt, der lotrecht zur zweiten Verbrennungsstufe liegt, und wobei die Zirkulation des Verbrennungsgases im Wesentlichen senkrecht zu der des Katalysators verläuft, und so ist, dass das Verbrennungsgas nacheinander alle Sektoren der ersten Verbrennungsstufe in der folgenden Reihenfolge 1, 2, 3, 4, dann alle Sektoren der zweiten Verbrennungsstufe in der folgenden Reihenfolge 4', 3', 2', 1' durchläuft, wenn die Anzahl der radialen Sektoren 4 ist, und in der folgenden Reihenfolge 1, 2, dann 2', 1', wenn die Anzahl der Sektoren 2 ist, wobei das Verfahren derart ist, dass die molare Brennmitteldurchflussmenge für alle Sektoren der ersten Stufe einen gleichen ersten Wert aufweist, wobei der erste Wert die Verbrennung einer Koksmenge im Bereich zwischen 60 % und 80 % des gesamten, auf dem Katalysator abgelagerten Koks ermöglicht, und einen zweiten Wert, der vom vorherigen verschieden ist, für alle Sektoren der zweiten Verbrennungsstufe, wobei der zweite Wert die vollständige Verbrennung des restlichen Koks mit einem Sauerstoffüberschuss in dem Brenngas im Bereich zwischen 0,2 % und 0,4 % ermöglicht, und wobei die Eingangstemperatur von allen Sektoren der ersten Stufe des Verbrennungsbereichs im Bereich zwischen 460 °C und 480 °C liegt, und die Eingangtemperatur von allen Sektoren der zweiten Stufe des Verbrennungsbereich im Bereich zwischen 470 °C und 490 °C liegt, wobei Kühlgaszusätze am Eingang jedes Sektors einer Stufe erfolgen, um die Eingangstemperatur in den vorgenannten Grenzen zu erhalten, wobei dieses Kühlgas das Oxidationsgas ist, das am Ausgang des Verdichters der Recyclingschleife entnommen wird, und diese Zusätze mithilfe von spezifischen Leitungen realisiert werden, die in die Leitungen münden, die es ermöglichen, den Ausgang eines Sektors mit dem Eingang des benachbarten Sektors zu verbinden.

2. Verfahren zur Regeneration eines verkokten Katalysators nach Anspruch 1, wobei das Brenngas von außen nach innen auf einem gegebenen Sektor des Verbrennungsbereichs und von innen nach außen auf dem benachbarten Sektor des betroffenen Sektors zirkuliert.

3. Verfahren zur Regeneration eines verkokten Katalysators nach einem der Ansprüche 1 bis 2, wobei das Brenngas Luft ist, das einen Sauerstoffgehalt im Bereich zwischen 4 % und 21 % aufweist.

4. Verfahren zur Regeneration eines verkokten Katalysators nach einem der Ansprüche 1 bis 3, wobei das Brenngas am Eingang jedes Sektors des Verbrennungsbereichs durch eine Austauschervorrichtung abgekühlt wird.

5. Anwendung des Verfahrens zur Regeneration eines verkokten Katalysators nach Anspruch 1 auf die folgenden Verfahren: regenerative Reformierung, Skelettisomerisierung, Metathese, Oligocracken, Dehydrogenierung.

## Claims

1. A process for the regeneration of a coked catalyst moving in moving bed mode, comprising at least one zone for the combustion of coke deposited on the catalyst, said combustion zone having an annular shape and being divided into at least two combustion stages, each stage being divided into a number N of radial sectors, which are substantially equal, N being in the range 2 to 4, said process being **characterized in that** the catalyst flowing under gravity from one sector of the first combustion stage to the sector in vertical alignment of the second combustion stage by means of drop legs, and the movement of combustion gas being substantially perpendicular to that of the catalyst, and such that the combustion gas passes in succession through all of the sectors of the first combustion stage in the order1, 2, 3, 4, then through all of the sectors of the second combustion stage in the order 4', 3', 2', 1', when the number of radial sectors is 4 and in the following order 1, 2 then 2',1' when the number of radial sectors is 2, said process being such that the molar flow rate of fuel having the same first value for all of the sectors of the first stage, said first value allowing the combustion of a quantity of coke in the range 60% to 80% of the total coke deposited on the catalyst and a second value, distinct from the preceding value, for all of the sectors of the second combustion stage, said second value allowing complete combustion of residual coke with an excess of oxygen in the fuel gas in the range 0.2% to 0.4%, the inlet temperature for all of the sectors of the first stage of the combustion zone being in the range 460°C to 480°C and the inlet temperature for all of the sectors of the second stage of the combustion zone being in the range 470°C to 490°C, regeneration process in which some make ups of gas for cooling are achieved at the entrance of each sector of each stage, in order to maintain the entry temperature inside the previous limits, this cooling gas being the fuel gas at the exit of the compressor of the so called recycle loop, and these make ups of cooling gas being achieved by means of specific lines that open on lines allowing to link the exit of one sector to the entry of the neighbouring sector.

2. A process for the regeneration of a coked catalyst according to claim 1, in which the fuel gas moves from the exterior towards the interior over a given sector of the combustion zone and from the interior towards the exterior over the sector neighbouring the sector under consideration.

3. A process for the regeneration of a coked catalyst according to any one of claims 1 to 2, in which the fuel gas is air with an oxygen content in the range 4% to 21 %.

4. A process for the regeneration of a coked catalyst according to any one of claims 1 to 3, in which the fuel gas is cooled at the inlet to each sector of the combustion zone using an exchanger device.

5. Application of a process for the regeneration of a coked catalyst according to claim 1 to the following processes: regenerative reforming, skeletal isomerization, metathesis, oligocracking and dehydrogenation.
